# EUROPÄISCHE PATENTSCHRIFT

(11) **EP 2 447 843 B1**
(45) Veröffentlichungstag und Bekanntmachung des Hinweises auf die Patenterteilung: **03.07.2013**
(21) Anmeldenummer: 10186727.3
(22) Anmeldetag: 06.10.2010
(51) Int. Cl.: G06F 11/16

(54) **Verfahren zur Verifizierung eines Anwendungsprogramms einer fehlersicheren Speicherprogrammierbaren Steuerung, und Speicherprogrammierbare Steuerung zur Ausführung des Verfahrens**
Method for verifying an application program of an error-free memory-programmable control device and memory-programmable control device for carrying out the method
Procédé de vérification d'un programme d'application d'une commande par programme enregistré protégée contre les erreurs et commande par programme enregistré destinée à l'exécution du procédé

(43) Veröffentlichungstag der Anmeldung: 02.05.2012
(73) Patentinhaber: Siemens Aktiengesellschaft, 80333 München (DE)
(72) Erfinder: Walter, Markus, 96050, Bamberg (DE); Kydles, Jens, 90419, Nürnberg (DE)

(56) Entgegenhaltungen:
- US-A1- 2003 093 719
- US-A1- 2004 250 167
- US-A1- 2008 086 652

## Beschreibung

Die Erfindung betrifft ein Verfahren zur Verifizierung eines Anwendungsprogramms einer fehlersicheren Speicherprogrammierbaren Steuerung gemäß dem Oberbegriff des Patentanspruchs 1, und eine Speicherprogrammierbare Steuerung gemäß dem Oberbegriff des Patentanspruchs 11.

Speicherprogrammierbare Steuerungen werden in allen Bereichen der Automatisierungstechnik eingesetzt. In solchen Anwendungsfällen, bei denen ein Versagen der Speicherprogrammierbaren Steuerung gravierende Folgen hätte, beispielsweise Schäden an Maschinen und Anlagen oder sogar Personenschäden, werden erhöhte Anforderungen an die Betriebssicherheit gestellt. Die in solchen Szenarien eingesetzten Speicherprogrammierbaren Steuerungen werden dazu mit Maßnahmen versehen, die zu einer erhöhten Ausfall- oder Betriebssicherheit führen, beispielsweise durch redundante Auslegung, bessere Fehlererkennung o.ä. Solche Speicherprogrammierbaren Steuerungen werden auch als "sicherheitsgerichtet", "fehlersicher", "ausfallsicher" etc. bezeichnet. Kriterien für die geforderte funktionale Sicherheit sind auch in zahlreichen Normen niedergelegt, beispielsweise in der europäischen Norm EN 61508.

Für die fehlersicheren "sicherheitsgerichteten" Speicherprogrammierbaren Steuerungen muss beispielsweise für einen Anwender sicher prüfbar sein, dass das richtige Sicherheitsprogramm in die Steuerung geladen wurde, d.h., dass überprüfbar sein muss, dass das im Arbeitsspeicher der programmierbaren Steuerung geladene Anwendungsprogramm dasjenige ist, welches für die konkrete Aufgabe vorgesehen ist, und nicht etwa ein anderes Anwendungsprogramm oder ein Anwendungsprogramm mit dem falschen Ausgabestand (Version). Dabei muss weiter sichergestellt werden, dass nicht nur das "richtige" Anwendungsprogramm in den Arbeitsspeicher geladen wird bzw. ist, sondern dass dieses auch abgearbeitet wird, und nicht etwa Programme oder Programmbausteine (Funktionsbausteine) eines anderen Anwendungsprogramms, welches beispielsweise vorher abgearbeitet wurde. Es kann also passieren, dass ein komplettes "falsches" oder veraltetes Anwendungsprogramm zur Ausführung kommt, oder aber, dass nur ein einzelner Funktionsbaustein aus einem vorher abgearbeiteten Anwendungsprogramm übrig geblieben ist, der dann ungewollt abgearbeitet wird. Ebenso kann es passieren, dass einzelne Funktionsbausteine gelöscht sind oder beschädigt wurden, so dass das vorliegende Anwendungsprogramm unvollständig oder unbrauchbar ist.

Um solche Fehler auszuschließen, sind beim "Laden" der fehlersicheren Speicherprogrammierbaren Steuerungen verschiedene Vorgehensweisen üblich. So wird zum Einen sichergestellt, dass ein Ladespeicher, also beispielsweise eine Speicherkarte, eine Festplatte oder ein anderer Massenspeicher der Speicherprogrammierbaren Steuerung, das "richtige" Anwendungsprogramm und somit die "richtigen" Funktionsbausteine bzw. Programmbausteine enthält, indem seitens der Speicherprogrammierbaren Steuerung eine Programmidentifikation des Anwendungsprogramms bzw. der Programmbausteine oder Funktionsbausteine im Ladespeicher ermittelt wird. Dies bedeutet, dass beispielsweise die Funktionsnamen und der jeweilige Ausgabestand (Version) und ggf. auch die im Ladespeicher vorliegende Reihenfolge (Anordnung) dieser "Routinen" als Programmidentifikation ermittelt wird. Diese Informationen werden an eine externe Komponente, meist das Erstellsystem ("Engineering-System"), übertragen und dort mit einem Sollwert verglichen, der bei der Erstellung des Anwendungsprogramms ermittelt und gespeichert wurde. Im Falle eines positiven Vergleichs kann eine Bestätigungsmeldung von der externen Komponente zu der Speicherprogrammierbaren Steuerung gesendet werden, wodurch die Abarbeitung des Anwendungsprogramms letztlich freigegeben wird. Durch dieses Vorgehen ist sichergestellt, dass im Ladespeicher das richtige Anwendungsprogramm mit all seinen zugehörigen Funktionsbausteinen und Programmbausteinen vorliegt, und zwar auch in der richtigen Reihenfolge und im richtigen Ausgabestand (Version).

Da es dennoch vorkommen kann, dass nach dem Laden des somit festgestellten Anwendungsprogramms noch Teile (Fragmente) eines anderen Anwendungsprogramms im Arbeitsspeicher der Speicherprogrammierbaren Steuerung vorliegen und somit zur Ausführung gelangen können, müssen sog. Ladevorschriften eingehalten werden, d.h., dass Maßnahmen ergriffen werden müssen, die sicherstellen, dass vor einem Laden des "richtigen" Anwendungsprogramms der Arbeitsspeicher von Programmfragmenten o.ä. befreit wird. Dies kann beispielsweise bedeuten, dass ein "Reset" der Speicherprogrammierbaren Steuerung vorgenommen wird, dass der komplette Arbeitsspeicher mit Standardwerten vollgeschrieben wird (beispielsweise logische "0" oder logische "1" in jeder Speicherzelle), o.ä.

Insbesondere die Beachtung der vorgeschriebenen Ladevorschriften stellt in der Praxis ein zunehmendes Problem dar, denn diese Ladevorschriften unterscheiden sich bei verschiedenen eingesetzten Speicherprogrammierbaren Steuerungen ("Zielsysteme", "Targets") teilweise recht erheblich voneinander. Dies bedeutet, dass beispielsweise eine einfache Speicherprogrammierbare Steuerung mit einer proprietären Hardware, die als Ladespeicher lediglich eine Speicherkarte aufweist und nur einen zusammenhängenden Arbeitsspeicher aufweist, mit anderen Ladevorschriften geladen und gestartet wird, als beispielsweise ein PCbasiertes System, bei dem die Speicherprogrammierbare Steuerung in einem Echtzeitbetriebssystem, parallel zu einem fensterorientierten Betriebssystems (beispielsweise Microsoft Windows) betrieben wird. Zwar ist bei Einhaltung der jeweils gültigen Ladevorschriften sicher gestellt, dass tatsächlich das "richtige" Anwendungsprogramm im Arbeitsspeicher geladen ist und zudem keine anderen Programmteile o.ä. im Arbeitsspeicher vorhanden sind, aber aufgrund der unterschiedlichen Ladevorschriften für unterschiedliche Systeme können leicht Fehler auftreten, die nicht oder oft nur schwer erkannt werden und dazu führen, dass eben nicht unbedingt der ordnungsgemäße Zustand erreicht worden ist.

Aus der Druckschrift US 2008/0086652 A1 - Krieger et al. "Updating a Power Supply Microcontroller" ist bekannt, eine Checksumme über eine geladene Firmware zu erstellen und diese lokal mit einer gespeicherten Checksumme zu vergleichen, wobei nur im Falle eines positiven Vergleichsergebnisses die Firmware zur Ausführung freigegeben wird.

Die beiden Veröffentlichungen US 2003/0093719 A1 - Ali-Santosa et al. "Method and Apparatus for Detecting corrupt Software Code" und US 2004/0250167 A1 - Sato et al. "information Processing Apparatus and Method, Program, and Recording Medium" zeigen beide dazu ähnliche verfahren, bei denen ebenfalls jeweils lokal eine Checksumme über ein geladenes Programm gebildet und mit einem Sollwert verglichen werden.

Ein weiterer Nachteil besteht darin, dass neben der notwendigen Kenntnis der Ladevorschriften und deren Beachtung auch eine genaue Kenntnis bzw. Analyse der jeweiligen speicherprogrammierbaren Steuerung und deren Speicherstrukturen notwendig ist.

Es ist also eine Aufgabe der vorliegenden Erfindung, den Ladevorgang bei sicherheitsgerichteten speicherprogrammierbaren Steuerungen zu vereinfachen.

Es ist eine weiter Aufgabe der vorliegenden Ereindung, einen fehlerhaften Inhalt des Arbeitsspeichers der speicherprogrammierbaren Steuerung zu erkennen, der beispielsweise aus einer fehlerhaften Durchführung einer Ladeprozedur (Ladevorschriften) resultiert.

Es ist dabei ein zentraler Gedanke der vorliegenden Erfindung, dass nicht oder nicht nur das im Ladespeicher vorliegende Anwendungsprogramm hinsichtlich seiner Übereinstimmung mit dem gewünschten Zustand überprüft wird, sondern dass der. Inhalt des Arbeitsspeichers nach dem Ladevorgang hinsichtlich der Übereinstimmung mit dem gewünschten Zustand (Sollwert) überprüft wird, so dass auch unerwünschte Zustände, die durch ein Nicht-Befolgen oder durch Fehler bei der Anwendung der Ladevorschriften entstanden sind, sicher erkannt werden. Es ist ein weiterer Gedanke der vorliegenden Erfindung, dass diese Überprüfung und somit der vergleich zwischen dem Istwert und einem Sollwert mittels der betroffenen speicherprogrammierbaren Steuerung selbst vorgenommen wird.

Die Lösung der Aufgabe sieht insbesondere ein Verfahren nach Patentanspruch 1 und eine speicherprogrammierbare Steuerung gemäß Patentanspruch 9 vor.

Dabei ist ein Verfahren zur Verifizierung eines Anwendungsprogramms einer sicherheitsgerichteten speicherprogrammierbaren Steuerung vorgesehen, wobei ein aus einer Anzahl Programmbausteine bestehendes Anwendungsprogramm aus einem Ladespeicher in einen Arbeitsspeicher übertragen wird. Dabei wird im Zuge der Erstellung des Anwendungsprogramms als ein Sollwert eine Signatur über eine Mehrzahl der Programmbausteine gebildet, wobei eine erste Kopie dieser Signatur zu der fehlersicheren speicherprogrammierbaren Steuerung übertragen und dort gespeichert wird, und wobei eine zweite Kopie dieser Signatur in einer externen Komponente gespeichert wird. zumindest nach einer Übertragung des Anwendungsprogramms und der ersten Kopie der Signatur zu der fehlersicheren speicherprogrammierbaren Steuerung wird die erste Kopie der Signatur zu der externen Komponente übertragen ("Zurückgeleeen") und mittels eines zweiten Vergleichs mit der zweiten Kopie der Signatur verglichen wird. Weiter wird aus dem im Arbeitsspeicher vorliegenden Anwendungsprogramm oder aus einer Mehrzahl der in den Arbeitsspeicher übertragenen Programmbausteine mittels einer Verwaltungsinstanz der fehlersicheren speicherprogrammierbaren Steuerung als ein Istwert eine zweite Signatur ermittelt wird, wonach diese ermittelte zweite Signatur mittels eines ersten Vergleichs, der seitens der speicherprogrammierbaren Steuerung vorgenommen wird, mit der ersten Kopie der Signatur verglichen wird. Die speicherprogrammierbare Steuerung wird im Fall einer Diskrepanz bei einem der Vergleiche in einen sicheren Betriebszustand überführt. Durch dieses Verfahren ist sichergestellt, dass das im Arbeitsspeicher der speicherprogrammierbaren Steuerung vorliegende Anwendungsprogramm genau dem Anwendungsprogramm entspricht, welches beibei der Erstellung (Programmierung) festgelegt wurde. Das Rücklesen der auf der speicherprogrammierbaren steuerung abgelegten Signatur und der Vergleich mit der als Sollwert gespeicherten Signatur hängt dabei den Fehler ab, der entsteht, wenn gar keine Daten in die speicherprogrammierbaren Steuerung übertragen werden (weder ein neues Anwenderprogramm, noch eine Kopie des Sollwerts der Signatur), sondern ein "alters" Anwendungsprogramm mit passender Signatur dort erhalten geblieben ist; in einem solchen Fall wäre sonst ein Anlauf der speicherprogrammierbaren Steuerung mit einem "ungewünschten" Programm möglich.

Die Lösung der Aufgabe sieht weiter eine speicherprogrammierbare Steuerung zum Einsatz in einem sicherheitsgerichteten Anwendungsfall vor, wobei diese speicherprogrammierbare Steuerung zur Ausführung eines der vorgenannten Verfahrens ausgebildet ist, wobei die speicherprogrammierbare Steuerung mit einer Verwaltungsinstanz zum Ermitteln eines Istwertes einer Signatur des Anwendungsprogramms im Arbeitsspeicher der speicherprogrammierbaren Steuerung und mit einer Vergleichseinrichtung zum Vergleich des ermittelten Istwertes mit einer als Sollwert gespeicherten zweiten Signatur ausgerüstet ist, und wobei die speicherprogrammierbare Steuerung derart eingerichtet ist, dass im Fall eines negativen Resultats des Vergleichs ein sicherer Betriebszustand aktiviert wird. Durch eine solche speicherprogrammierbare Steuerung kann das vorgenannte Verfahren durchgeführt werden, so dass die damit korrelierten Vorteile erzielt werden können.

Vorteilhafte Ausgestaltungen des erfindungsgemäßen Verfahrens sind in den abhängigen Patentansprüchen gegeben. Die dabei gegebenen Merkmale und Vorteile gelten sinngemäß auch für die erfindungsgemäße speicherprogrammierbare Steuerung.

Als der sichere Betriebszustand kann beispielsweise ein Not-Halt (Not-Stop) der speicherprogrammierbaren Steuerung angestrebt werden, wobei in einer vorteilhaften Ausführungsform die elektrischen Ausgänge der speicherprogrammierbaren Steuerung in dafür vordefinierte Zustände gebracht werden können.

Vorteilhaft erfolgt die Ermittlung der Signatur (Istwert) und der Vergleich mit dem Sollwert nach dem Laden des Programms in den Arbeitsspeicher, also vor dem ersten Programmstart, so dass im Fehlerfall eine Ausführung des fehlerhaften Anwendungsprogramme von vornherein verhindert werden kann. In einer alternativen Ausführungsform werden sämtliche Programmbausteine, die in den Arbeitsspeicher geladen werden, zur Erstellung der Signatur (Istwert) herangezogen, so dass sich eine Überprüfung des kompletten Arbeitsspeicher-inhalts erübrigt, sofern mit der laufenden, dynamischen Erstellung der Signatur nach jedem Neustart der speicherprogrammierbaren Steuerung oder "Urlöschen" des Arbeitsspeichers begonnen wird.

Zusätzlich kann die ermittelte Signatur (Istwert) auch zu der externen Komponente, beispielsweise einem Engineering-System, übertragen werden, wo ein weiterer Vergleich mit einer dort als Sollwert gespeicherten Signatur bzw. deren Kopie erfolgt, und wobei der Betrieb des Anwendungsprogramms nur im Fall eines positiven Vergleichs freigegeben wird, beispielsweise durch Übermittlung einer Freigabemeldung an die speicherprogrammierbare Steuerung. Damit kann der seitens der speicherprogrammierbare Steuerung vorgenommene Vergleich überprüft oder ergänzt werden.

Vorteilhaft wird die als Sollwert verwendete Signatur bzw. die als erster und zweiter Sollwert verwendeten Signaturen im zunge der Erstellung des Anwendungsprogramme ermittelt und gespeichert, wobei vorteilhaft anstelle einer Programmidentifikation, die sich primär auf Funktions- und Dateinamen bzw. deren Versionsnummer stützt, ein für den Inhalt der jeweiligen Funktionsbausteine, Programmroutinen etc. charakteristischer Prüfwert gebildet wird, beispielsweise ein CRC-Wert (CRC - Cyclic Redundancy Check), ein Hash-Wert, eine Prüfsumme, ein sog. "Fingerprint" etc. Dabei können vorteilhaft die Prütwerte oder Signaturen der einzelnen Programmteile, Funktionsbausteine o.ä. miteinander zu einem Gesamtwert verknüpft oder verrechnet werden, beispielsweise durch eine sog. XOR-Funktion (XOR = exklusive- oder-Verknüpfung auf Bit-Ebene). Damit ist eine sichere Detektion von inhaltlichen Fehlern und von strukturellen Fehlern möglich, wobei die strukturellen Fehler insbesondere auch dann erkannt werden können, wenn die Reihenfolge der einzelnen Funktionsböcke und Programmbausteine Einfluss auf den Signaturwert hat.

Daa Vorhandensein von nicht-gewünschten Programmbausteinen oder Programmfragmenten im Arbeitsspeicher kann sicher erkannt werden, wenn die Signatur, die als Istwert verwendet wird, aus allen im Arbeitsspeicher vorhandenen Programmbausteinen ("Code-Sequenzen") gebildet wird und beim Start der Steuerung mit dem Sollwert der Signatur im Ladnepeicher verglichen wird.

Mit dem vorliegenden Verfahren können auch nachträgliche Änderungen bzw. Verfälschungen des Inhalts des Arbeitsspeichers bzw. desjenigen Arbeitsspeicher-Bereichs, in dem das ausführbare Anwendungsprogramm gespeichert ist, festgestellt werden, indem während eines laufenden Betriebes der speicherprogrammierbaren Steuerung wiederholt der Istwert der Signatur neu festgestellt wird und erneut mit dem Sollwert bzw. den Sollwerten verglichen wird. Eine solche wiederholte Ausführung kann beispielsweise auch in Arbeitspausen bzw. in solchen Arbeitszyklen stattfinden, bei denen der Mikroprozessor der speicherprogrammierbaren Steuerung durch das Anwendungsprogramm allein nicht vollständig ausgenutzt wird.

Als externer Komponente, mittels deren der zweite Vergleich vorgenommen wird, kommt in erster Linie ein Erstelltsystem oder ein Entwicklungssystem infrage, welches zur Erstellung des Anwendungsprogramms und somit auch zur Erstellung des Sollwert der Signatur verwendet wurde. Die Funktionalität, welche den "externen Vergleich vornimmt, kann jedoch auch in eine andere Komponente ausgelagert werden, beispielsweise in einen Sicherheitsserver, der die Signaturen aller Sicherheitsgerichtetenprogramme einer Automatisierung an Ordnung verwaltet, oder Ähnliches. Insbesondere kommt auch ein so genannter "Inbetriebnahme-Server" dafür in Betracht, wobei mit einem solchen Server viele oder alle speicherprogrammierbaren Steuerungen einer Automatisierunganordnung mit Anwendungsprogrammen versorgt werden können.

Ein Ausführungsbeispiel des erfindungsgemäßen Verfahrens wird nachfolgend anhand der Zeichnung erläutert. Das Ausführungebeispiel dient gleichzeitig der Exläuterung einer erfindungsgemäßen speicherprogrammierbaren Steuerung.

Dabei zeigt:
- Figur 1: in einer schematischen Darstellung die für die Ausführung des Verfahrens notwendigen Komponenten einer speicherprogrammierbaren Steuerung und eines Erstellsystems / Engineering-Systems gemäß dem Stand der Technik, und
- Figur 2: eine Anordnung, die zur Durchführung des Erfindungsgemäßen Verfahrens eingerichtet ist.

In der Figur ist schematisch eine Anordnung aus einem Entwicklungssystem ES (auch "Erstellsystem", "Programmiersystem" oder "Engineering-System" genannt) und aus einer speicherprogrammierbaren Steuerung SPS gezeigt, die über eine (nicht dargestellte) Datenverbindung miteinander verknüpft sind. Anhand dieser Anordnung soll ein Verfahren gemäß dem Stand der Technik erläutert werden. Dabei sei angenommen, dass ein Anwendungsprogramm erstellt wurde, welches aus einer vielzahl von Programmbausteinen F-FBx, F-DBx, F-FCx (oft auch als "Funktionen", Routinen", "Funktionsblöcke" o.ä. bezeichnet) besteht. Dieses Anwendungsprogramm ist im Entwicklungssystem Es in einem Speicher BO (Baustein-Ordner) gespeichert. Nach der Fertigstellung dieses Anwendungsprogramms wird durch das Entwicklungssystem ES mittels einer dort ausführbaren Funktion E-SIG-S (Erstellung Signatur Sollwert) als ein Sollwert eine Signatur SIG-S erstellt und gespeichert. Diese Signatur SIG-S ist hierbei eine sog.

"Programmidentifikation", d.h., dass es sich um einen Prüfwert handelt, welche aus den Bezeichnungen und den Versions-Bezeichnungen der Dateien des Anwenderprogramms oder der Programmbausteine F-FBx, F-DBx, F-FCx des Anwendungsprogramms erstellt ist. Um das Anwendungsprogramm auf des fehlersicheren speicherprogrammierbaren Steuerung SPS zur Ausführung zu bringen, wird das Anwendungsprogramm in den Ladespeicher LS der speicherprogrammierbaren Steuerung SPS übertragen; der Ladespeicher LS kann beispielsweise eine austauschbare Speicherkarte ("Flashe-Karte o.ä.), eine Festplatte oder ein anderer Massenspeicher sein.

Um das Anwendungsprogramm ausführen zu können, muss es in den Arbeitsspeicher AS übertragen werden. Dazu ermittelt die Objektverwaltung OV der speicherprogrammierbaren Steuerung SPS Informationen, beispielsweise Objektnamen, Funktionsnamen, Dateinamen, Versionsstände etc. des Anwendungsprogramms bzw. der Objekte, Routinen und Programmbausteine F-FBx, F-DBx, F-FCx, die das Anwendungsprogramm im Ladespeicher LS bilden, und übermittelt diese auch Informationen an das Entwicklungssystem ES. Dort erstellt eine Funktion B-SIG-I (Erstellung Signatur Istwert), die in einer vorteilhaften Ausgestaltung auch identisch zu der Funktion E-SIG-S sein kann, aus diesen Informationen den Istwert einer Signatur SIG-I. Danach werden der Sollwert SIG-S und der Istwert SIG-I mittels eines Vergleichs V verglichen, wobei nach einer Übereinstimmung eine positive Quittierungsmeldung an die Objektverwaltung OV der speicherprogrammierbaren Steuerung SPS übermittelt wird. vor, während oder nach diesem vergleich wird seitens der speicherprogrammierbaren Steuerung SPS eine Folge von Ladeanweisungen bzw. Ladevorschriften abgearbeitet, die dafür sorgt, dass der Arbeitsspeicher AS vollständig gelöscht wird, so dass keine Fragmente von vorher abgearbeiteten Anwendungsprogrammen dort verbleiben. Gemäß der Ladevorschriften wird nun das mittels der positiven Quittierungsmeldung freigegebene Anwendungsprogramm bzw. die Programmbausteine, die dieses bilden, in den Arbeitspeicher AS geladen und zur Ausführung gebracht, wobei selbstverständlich in dem Fall einer negativen Quittierungsmeldung der Programmstart verhindert wird. In einem solchen Fall werden (nicht dargestellte) Ausgänge der speicherprogrammierbaren Steuerung SPS in einen definierten Zustand gesetzt oder beispielsweise abgeschaltet. Der "sichere Betriebszustand" kann dabei für jede speicherprogrammierbare steuerung SPS bzw. jeden Anwendungsfall gesondert definiert sein. Die Ladevorschriften können auch Arbeitsanweisungen umfassen, mit denen sichergestellt wird, dass das Anwendungsprogramm vollständig und richtig in den Arbeitsspeicher übertragen wird, beispielsweise durch ein sog. "Kontroll-Lesen" ("Verify").

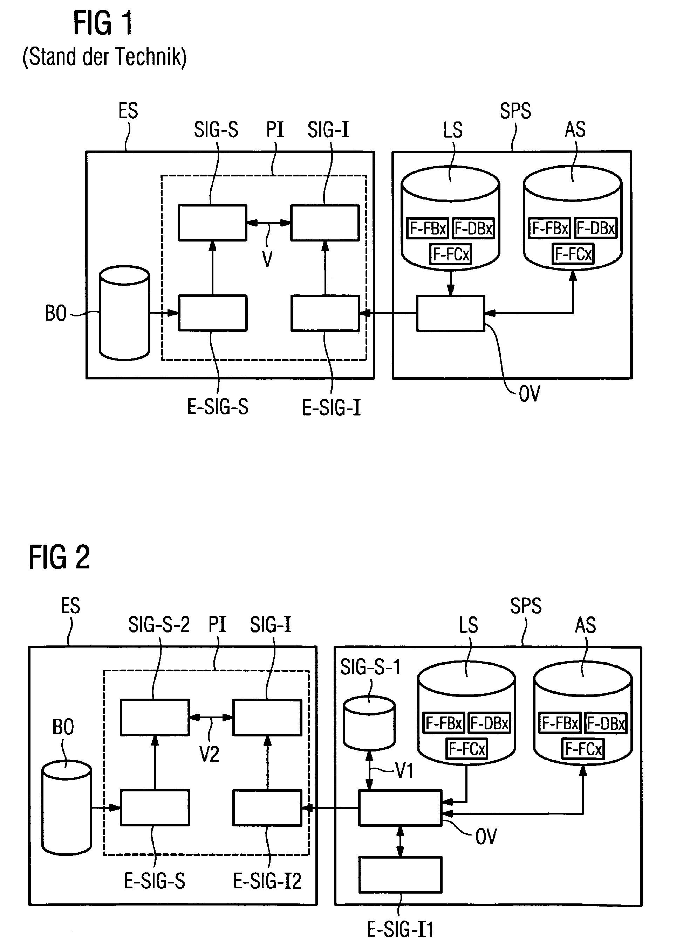

Für das Ausführungsbeispiel des Standes der Technik (Figur 1) wurde aus Gründen der Übersichtlichkeit eine einfache Architektur ausgewählt, welche mit einfachen Ladevorschriften startbar ist. In der Praxis werden in der Regel komplexere Architekturen verwendet, die sich je nach konkreter Situation erheblich voneinander unterscheiden können und die komplexe und oft sehr unterschiedliche Ladevorschriften erfordern. Dabei kann das Abarbeiten der falschen, d.h. nicht auf die konkrete Konfiguration passender, Ladevorschriften zu ungewünschten Ergebnissen führen, die zudem nicht zwangsläufig erkannt werden.

Die Funktionen E-SIG-S und E-SIG-1 sowie die Einrichtung zur Durchführung des Vergleichs V können in einem Software-Modul PI (Programm-Identifikation) zusammengefasst sein; entsprechendes gilt für die dazu analogen Funktionen E-SIG-S und E-SIG-I2 sowie die Einrichtung zur Durchführung des Vergleichs V2 der nachfolgend diskutierten Figur 2.

Im Folgenden wird anhand der Figur 2 das erfindungsgemäße Verfahren erläutert, wobei diejenigen Komponenten, Einrichtungen und Funktionen, deren Bezeichnung oder Bezugszeichen bereits aus der Figur 1 bekannt sind, hierbei nicht neu beschrieben werden.

Die in der Figur 2 gezeigte Architektur entspricht, was die Hardware anbelangt, der anhand der Figur 1 (Stand der Technik) erläuterten Situation. Nach der Erstellung eines Anwendungsprogramms, welches wieder im Speicher BO des Entwicklungssystems ES vorliegt, wird auch hier durch eine Funktion E-SIG-S eine Signatur (Sollwert) über das Anwendungsprogramm bzw. die Programmbausteine F-FBx, F-DBx, F-FCx des Anwendungsprogramms erzeugt. Diese Signatur wird nun jedoch in einer ersten Kopie SIG-S-1 in der speicherprogrammierbaren Steuerung SPS gespeichert, wobei die Speicherung entweder zusammen mit dem Anwendungsprogramm im Ladespeicher LS vorgenommen werden kann, oder aber an einer vom Ladespeicher LS unterschiedlichen Stelle (Speichereinrichtung) der speicherprogrammierbaren Steuerung SPS. Außerdem wird eine zweite Kopie SIG-S-2 in einem Speicher des Entwicklungssystems ES gespeichert.

Im Folgenden sei angenommen, dass das Anwendungsprogramm im Ladespeicher LS vorliegt, und die erste Kopie der Signatur SIG-S-1 in einem zweiten, vom Ladespeicher LS unterschiedlichen Speicher der speicherprogrammierbaren Steuerung SPS gespeichert ist. Dieser zweite Speicher kann vorteilhaft eine sog. Smart-Card sein, die als "Start-Schüssel" in ein Lesegerät der speicherprogrammierbaren Steuerung SPS eingesteckt wurde, so dass die dort gespeicherten Informationen, insbesondere die erste Kopie der Signatur SIG-S-1, von einer Objektverwaltung OV ausgelesen werden können. Zur Vorbereitung des Programmstarts werden durch die Objektverwaltung OV Ladevorschriften durchgeführt, die dazu führten, dass der Arbeitsspeicher AS gelöscht wird, dass danach das Anwendungsprogramm und damit die Programmbausteine von dem Ladespeicher in den Arbeitsspeicher AS übertragen werden, wonach die Sicherheitsüberprüfung durchgeführt wird. Vorteilhaft können die Ladevorschriften fest in einem Speicher der speicherprogrammierbaren Steuerung SPS gespeichert sein.

Die Sicherheitsüberprüfung umfasst den Aufruf einer Funktion B-SIG-I1, wodurch über den Inhalt des Arbeitsspeichers AS durch die SPS bzw. die dort vorliegende Funktion E-SIG-I1, eine Signatur (Programmsignatur, CRC-Wert, "Fingerprint" o.ä.) verstellt wird, und wobei mittels eines Vergleichs V1 dieser Istwert mit der als Sollwert gespeicherten signatur SIG-S-1 verglichen wird. Alternativ kann auch jeder Programmblock o.ä., der in den Arbeitsspeicher AS übertragen wird, zur Bildung der Signatur beitragen, so dass ein "Screening" des Arbeitsspeicher erläßlich ist und durch das sukzessive Überprüfen der geladenen und der gelöschten (entladenen) Programm-Bausteine im Sinne einer "Durchflußkontrolle" ersetzt wird.

In dem Fall, in dem der Vergleich V1 positiv ausfällt, würde die Abarbeitung des Anwendungsprogramms im Arbeitsspeicher AS freigegeben, während im Fall eines negativen Vergleichs die speicherprogrammierbaren Steuerung SPS in einen sicheren Betriebszustand überführt wird, der bereits anhand des Standes der Technik (Figur 1) erläutert wurde. Die Auswertung der Vergleichsresultate kann von einer Routine des Anwendungsprogramms selbst erledigt werden; in diesem Fall wäre das Anwendungsprogramm so zu gestalten, dass diese Routine vor der Ausführung sicherheitskritischer Anweisungen ausgeführt wird. Alternativ können solche Aufgaben auch von einer "Firmware" erledigt werden.

Weiter wird vor einem Start des Anwendungsprogramms, also vor, während oder nach der Durchführung des ersten Vergleichs V1, ein zweiter Vergleich V2 vorgenommen, wozu Informationen von der speicherprogrammierbaren Steuerung SPS zu dem Entwicklungssystem ES übertragen werden. Diese Informationen umfassen den seitens der speicherprogrammierbaren Steuerung gespeicherte Kopie der signatur (Sollwert) SIG-S-1, die mittels eines Vergleichs V2 mit einer seitens des Entwicklungssystems ES gespeicherten zweiten Kopie SIG-S-2 (zweite Kopie des Sollwerts) verglichen wird. Im Fall eines positiven Vergleichs wird eine entsprechende positive Quittierungsmeldung an die speicherprogrammierbaren Steuerung SPS versendet, wobei diese, zusammen mit dem positiven Ergebnis des ersten Vergleichs V1, eine Freigabe des im Arbeitsspeicher AS vorliegenden Anwendungsprogramms bewirkt, wodurch die Programmausführung starten kann. Im Fall eines negativen zweiten Vergleichs V2 wird selbstverständlich eine negative Quittierungsmeldung zu der speicherprogrammierbaren Steuerung SPS versendet, wodurch der bereits beschriebene sichere Betriebszustand aufgelöst wird.

In einer vorteilhaften Ausgestaltung wird zusätzlich die bereits durch die Funktion E-SIG-I1 erzeugte Signatur ("Istwert") zu dem Entwicklungssystem ES oder einer anderen externen Komponente übertragen, so dass diese direkt durch einen weiteren zweiten Vergleich V2 mit der dort vorliegenden zweiten Kopie SIG-S-2 verglichen werden kann.

Während mit dem erfindungsgemäßen. Verfahren sichergestellt werden kann, dass das Anwendungsprogramm korrekt in den Arbeitsspeicher AS übertragen wurde, und dass darüber hinaus die erforderlichen Ladevorschriften erfolgreich und richtig angewendet wurden, ohne dass die konkret vorliegende Architektur und die konkreten Ladevorschriften bekannt sein müssen bzw. überprüft werden müssen, kann darüber hinaus auch sichergestellt werden, dass im Ladespeicher LS auch das für die vorliegende Situation "richtige" Anwendungsprogramm vorlegt, so dass ein Betrieb der speicherprogrammierbaren Steuerung SPS mit einem zwar grundsätzlich auch gültigen, aber für einen anderen Anwendungsfall vorgesehenen Anwendungsprogramm verhindert werden kann.

## Patentansprüche

1. Verfahren zur Verifizierung eines Anwendungsprogramms einer fehlersicheren speicherprogrammierbaren Steuerung (SPS), wobei ein aus einer Anzahl Programmbausteine (F-FBx, F-DBx, F-FCx) bestehendes Anwendungsprogramm aus einem Ladespeicher (LS) in einen Arbeitsspeicher (AS) übertragen wird, und,
im Zuge der Erstellung des Anwendungsprogramms als ein Sollwert eine Signatur über das Anwendungsprogramm oder eine Mehrzahl der Programmbausteine (F-FBx, F'-DBx, F-FCx) gebildet wird, wobei eine erste Kopie dieser Signatur (SIG-S-1) zu dar fehlersicheren speicherprogrammierbaren Steuerung (SPS) übertragen und dort gespeichert wird, und wobei eine zweite Kopie dieser Signatur (SIG-S-2) in einer externen Komponente (ES) gespeichert wird, und
zumindest nach einer Übertragung des Anwendungsprogramms und / oder der ersten Kopie der Signatur (SIG-S-1) zu der fehlersicheren speicherprogrammierbaren Steuerung (SPS) die erste Kopie der Signatur (SIG-S-1) zu der externen Komponente (ES) übertragen und mittels eines zweiten Vergleichs (V2) mit der zweiten Kopie der Signatur (SIG-S-2) verglichen wird, und
aus dem im Arbeitsspeicher (AS) vorliegenden Anwendungsprogramm oder aus der Mehrzahl der in den Arbeitsspeicher (AS) übertragenen Programmbausteine (F-FBx, F-DBx, F-FCx) mittels einer Verwaltungsinstanz (OV) der fehlersicheren speicherprogrammierbaren Steurung (SPS) als ein Istwert eine zweite Signatur (SIG-I) ermittelt wird, und
diese ermittelte zweite Signatur (SIG-I) mittels eines ersten Vergleichs (V1) der speicherprogrammierbaren Steuerung (SPS) mit der ersten Kopie der Signatur (SIG-S-1) verglichen wird, und dass die speicherprogrammierbare Steuerung (SPS) in dem Fall einer Diskrepanz bei dem ersten vergleich (V1) und /oder einer Diskrepanz bei dem zweiten Vergleich (V2) in einen sicheren Betriebszustand überführt wird.

2. Verfahren nach Patentanspruch 1,
**dadurch gekennzeichnet,**
**dass** zur Überführung der speicherprogrammierbaren Steuerung (SPS) in den sicheren Betriebszustand die Ausführung des in dem Arbeitsspeicher (AS) vorliegenden Anwendungsprogramms verhindert wird, oder das Anwendungsprogramm angehalten wird.

3. Verfahren nach einem der vorhergehenden Patentansprüche,
**dadurch gekennzeichnet,**
**dass** die Ermittelung der als Istwert (SIG-I) verwendeten Signatur und der Vergleich (V1) mit der zweiten Signatur (SIG-S-1) vor einem Programm-Start des Anwendungsprogramms erfolgt.

4. Verfahren nach einem der vorhergehenden Patentansprüche,
dadurch gekennzeichet, dass
die als ein Istwert (SIG-I) ermittelte Signatur zu der externen Komponente übertragen wird, wobei durch eine Einrichtung (PI) der externen Komponente ein weiterer Vergleich mit der dort als ein Sollwert gespeicherten zweiten Kopie der Signatur (SIG-S-2) erfolgt, wobei der Betrieb des Anwendungsprogramms der speicherprogrammierbaren Steuerung im Fall eines positiven Ergebnisses dieses weiteren Vergleichs (V2) freigegeben wird.

5. Verfahren nach einem der vorhergehenden Patentansprüche,
**dadurch gekennzeichnet, dass**
die Berechnung der als Sollwerte verwendeten Signatur bzw. Signaturen (SIG-S-1, SIG-S-2) im Zuge einer Erstellung des Anwendungsprogramms erfolgt.

6. Verfahren nach einem der vorhergehenden Patentansprüche,
**dadurch gekennzeichnet,**
**dass** die als Istwert (SIG-I) und die als Sollwert verwendeten Kopien der Signatur (SIG-S-1, SIG-S-2) jeweils aus Eigenschaften oder Signaturen der einzelnen Programmbausteine (F-FBx, F-DBx, F-FCx) gebildet werden.

7. Verfahren nach einem der vorhergehenden Patentansprüche,
**dadurch gekennzeichnet,**
**dass** die als Istwert verwendete Signatur (SIG-I) aus allen im Arbeitsspeicher (AS) vorhandenen oder während das Ladevorgangs in den Arbeitsspeicher (AS) übertragenen Programmbaustein (F-FBx, F-DBx, F-FCx) ermittelt wird.

8. Verfahren nach einem der vorhergehenden Patentansprüche,
**dadurch gekennzeichnet,**
**dass** eine wiederholung der Verifizierung mittels der Ermittlung eine Istwertes (SIG-I) der Signatur und mittels des Vergleichs (V1,) dieser Signatur mit der als Sollwert gespeicherten Kopie der signatur (SIG-S-1,) während des Betriebs der speicherprogrammierbaren Steuerung wiederholt durchgeführt wird.

9. Verfahren nach einem der vorhergehenden Patentansprüche,
**dadurch gekennzeichnet,**
**dass** als die externe Komponente (ES) ein Entwicklungssystem oder ein Engineering-System zur Erstellung des Anwendungsprogramms verwendet wird.

10. Verfahren nach einem der vorhergehenden Patentansprüche,
**dadurch gekennzeichnet,**
**dass** als die externe Komponente (ES) ein Sicherheitsserver oder ein Lade-Server einer industriellen Automatisierungsanordnung verwendet wird.

11. Speicherprogrammierbare Steuerung (SPS) zum Einsatz in einem sicherheitsgerichteten Anwendungsfall,
die zur Verifizierung eines aus einer Anzahl Programmbausteine (F-FBx, F-DBx, F-FCx) bestehenden Anwendungsprogramms, welches von einem Ladespeicher (LS) in einen Arbeitsspeicher (AS) der speicherprogrammierbare Steuerung (SPS) übertragen wurde, eingerichtet ist,
wobei die speicherprogrammierbare Steuerung (SPS) mit einer Verwaltungsinstanz (OV) zum Ermitteln eines Istwertes (SIG-I) einer Signatur des Anwendungsprogramms im Arbeitsspeicher (AS) der speicherprogrammierbaren Steuerung (SPS), und
mit einer Vergleichseinrichtung zu einem ersten vergleich (V1) des ermittelten Istwertes (SIG-I) mit einer im Zuge der Erstellung des Anwendungsprogramme erstellten und als Sollwert in der speicherprogrammierbaren Steuerung (SPS) gespeicherten zweiten Signatur (SIG-S-1) ausgerüstet ist,
**dadurch gekennzeichnet**, wobei
die speicherprogrammierbaren Steuerung (SPS) zu einer Übertragung einer Kopie der Signatur (SIG-S-1) zu einer externen Komponente (ES) und zum Empfang einer Quittierungsmeldung über das Resultat eines durch die externe Komponente (ES) durchgeführten zweiten Vergleichs (V2) der Kopie der Signatur (SIG-S-1) mit einer zweiten Kopie der Signatur (SIG-S-2) eingerichtet ist, und
wobei die speicherprogrammierbare Steuerung (SPS) derart eingerichtet ist, dass im Fall einer Diskrepanz bei dem
ersten Vergleich (V1) und oder einer Diskrepanz bei dem zweiten Vergleich (V2) ein sicherer Betriebszustand aktiviert wird.

## Claims

1. Method for verifying an application program in a failsafe programmable logic controller (SPS), an application program consisting of a number of program modules (F-FBx, F-DBx, F-FCx) being transmitted from a load memory (LS) to a main memory (AS), and a signature being formed, as a desired value, using the application program or a plurality of the program modules (F-FBx, F-DBx, F-FCx) when creating the application program, a first copy of this signature (SIG-S-1) being transmitted to the failsafe programmable logic controller (SPS) and being stored there, and a second copy of this signature (SIG-S-2) being stored in an external component (ES), and at least after the application program and/or the first copy of the signature (SIG-S-1) has/have been transmitted to the failsafe programmable logic controller (SPS), the first copy of the signature (SIG-S-1) being transmitted to the external component (ES) and being compared with the second copy of the signature (SIG-S-2) by means of a second comparison (V2), and a second signature (SIG-I) being determined, as an actual value, from the application program in the main memory (AS), or from the plurality of the program modules (F-FBx, F-DBx, F-FCx) transmitted to the main memory (AS), by means of a management entity (OV) of the failsafe programmable logic controller (SPS), and this second signature (SIG-I) which has been determined being compared with the first copy of the signature (SIG-S-1) by means of a first comparison (V1) of the programmable logic controller (SPS), and the programmable logic controller (SPS) being changed to a safe operating state in the event of a discrepancy in the first comparison (V1) and/or a discrepancy in the second comparison (V2).

2. Method according to Patent Claim 1,
**characterized**
**in that**, in order to change the programmable logic controller (SPS) to the safe operating state, the execution of the application program in the main memory (AS) is prevented or the application program in stopped.

3. Method according to one of the preceding patent claims,
**characterized**
**in that** the determination of the signature used as the actual value (SIG-I) and the comparison (V1) with the second signature (SIG-S-1) are carried out before the application program is started.

4. Method according to one of the preceding patent claims,
**characterized**
**in that** the signature determined as an actual value (SIG-I) is transmitted to the external component, a device (PI) of the external component carrying out a further comparison with the second copy of the signature (SIG-S-2) which is stored there as a desired value, operation of the application program in the programmable logic controller being enabled in the event of a positive result of this further comparison (V2).

5. Method according to one of the preceding patent claims,
**characterized**
**in that** the signature or signatures (SIG-S-1, SIG-S-2) used as desired values is/are calculated when creating the application program.

6. Method according to one of the preceding patent claims,
**characterized**
**in that** the copies of the signature (SIG-S-1, SIG-S-2) which are used as the actual value (SIG-I) and as the desired value are each formed from properties or signatures of the individual program modules (F-FBx, F-DBx, F-FCx).

7. Method according to one of the preceding patent claims,
**characterized**
**in that** the signature (SIG-I) used as the actual value is determined from all program modules (F-FBx, F-DBx, F-FCx) which are in the main memory (AS) or are transmitted to the main memory (AS) during the loading process.

8. Method according to one of the preceding patent claims,
**characterized**
**in that** the verification by determining an actual value (SIG-I) of the signature and by comparing (V1) this signature with the copy of the signature (SIG-S-1) stored as the desired value is repeatedly carried out during operation of the programmable logic controller.

9. Method according to one of the preceding patent claims,
**characterized**
**in that** a development system or an engineering system for creating the application program is used as the external component (ES).

10. Method according to one of the preceding patent claims,
**characterized**
**in that** a safety server or a load server of an industrial automation arrangement is used as the external component (ES).

11. Programmable logic controller (SPS) for use in a safety-oriented application,
which is set up to verify an application program which consists of a number of program modules (F-FBx, F-DBx, F-FCx) and has been transmitted from a load memory (LS) to a main memory (AS) of the programmable logic controller (SPS),
the programmable logic controller (SPS) being equipped with a management entity (OV) for determining an actual value (SIG-I) of a signature of the application program in the main memory (AS) of the programmable logic controller (SPS), and with a comparison device for carrying out a first comparison (V1) of the determined actual value (SIG-I) with a second signature (SIG-S-1) which is created when creating the application program and is stored as a desired value in the programmable logic controller (SPS), the programmable logic controller (SPS) being set up to transmit a copy of the signature (SIG-S-1) to an external component (ES) and to receive an acknowledgement message relating to the result of a second comparison (V2) of the copy of the signature (SIG-S-1) with a second copy of the signature (SIG-S-2) which is carried out by the external component (ES), and
the programmable logic controller (SPS) being set up in such a manner that a safe operating state is activated in the event of a discrepancy in the first comparison (V1) and/or a discrepancy in the second comparison (V2).

## Revendications

1. Procédé de vérification d'un programme d'application d'une commande ( SPS ) par programme enregistré sécurisée vis-à-vis d'erreurs, dans lequel on transfère un programme d'application constitué d'un certain nombre de modules ( F-FBx, F-DBx, F-FCx ) de programme d'une mémoire ( LS ) de charge dans une mémoire ( AS ) de travail, et
au cours de l'élaboration du programme d'application, on forme comme valeur de consigne une signature sur le programme d'application ou sur une pluralité de modules ( F-FBx, F-DBx, F-FCx ) de programme, une première copie de cette signature ( SIG-S-1 ) étant transmise à la commande ( SPS ) par programme enregistré sécurisée vis-à-vis d'erreurs et y étant mémorisée, tandis qu'une deuxième copie de cette signature ( SIG-S-2 ) est mémorisée dans un composant ( ES ) extérieur, et
au moins après une transmission du programme d'application et/ou de la première copie de la signature ( SIG-S-1 ) à la commande ( SPS ) par programme enregistré sécurisée vis-à-vis d'erreurs, la première copie de la signature ( SIG-S-1 ) est transmise au composant ( ES ) extérieur et, au moyen d'une deuxième comparaison ( V2 ), est comparée à la deuxième copie de la signature ( SIG-S-2 ), et
à partir du programme d'application présent dans la mémoire ( AS ) de travail, ou à partir de la pluralité des modules ( F-FBx, F-DBx, F-FCx ) de programme transmis dans la mémoire ( AS ) de travail, on détermine, au moyen d'une instance ( OV ) de gestion de la commande ( SPS ) par programme enregistré sécurisée vis-à-vis d'erreurs, une deuxième signature ( SIG-I ) comme valeur réelle, et
on compare cette deuxième signature ( SIG-I ) déterminée au moyen d'une première comparaison ( V1 ) de la commande ( SPS ) par programme enregistré à la première copie de la signature ( SIG-S-1 ), et
en ce que la commande ( SPS ) par programme enregistré passe dans un état de fonctionnement sécurisé s'il y a une divergence dans la première comparaison ( V2 ) et/ou une divergence dans la deuxième comparaison ( V2 ).

2. Procédé suivant la revendication 1,
**caractérisé en ce que**
pour le passage de la commande ( SPS ) par programme enregistré dans l'état de fonctionnement sécurisé, on empêche l'exécution du programme d'application présent dans la mémoire ( AS ) de mémoire ou on arrête le programme d'application.

3. Procédé suivant sur l'une des revendications précédentes,
**caractérisé en ce que**
on effectue la détermination de la signature utilisée comme valeur réelle ( SIG-I ) et la comparaison ( V1 ) avec la deuxième signature ( SIG-S-1 ) avant un début du programme d'application.

4. Procédé suivant l'une des revendications précédentes,
**caractérisé en ce que**
on transmet la signature déterminée comme valeur réelle ( SIG-I ) au composant extérieur en effectuant par un dispositif ( PI ) du composant extérieur une comparaison supplémentaire avec la deuxième copie, qui est mémorisée comme valeur de consigne, de la signature ( SIG-S-2 ), le fonctionnement du programme d'application de la commande par programme enregistré étant libéré, si le résultat de cette comparaison supplémentaire ( V2 ) est positive.

5. Procédé suivant l'une des revendications précédentes,
**caractérisé en ce que**
on effectue le calcul de la signature ou des signatures ( SIG-S-1, SIG-S-2 ) utilisées comme valeur de consigne au cours d'une élaboration du programme d'application.

6. Procédé suivant l'une des revendications précédentes,
**caractérisé en ce que**
on forme les copies, utilisées comme valeur réelle ( SIG-1 ) et comme valeur de consigne, de la signature ( SIG-S-1, SIG-S-2 ) respectivement à partir de propriétés ou de signatures des divers modules ( F-FBx, F-DBx, F-FCx ) de programme.

7. Procédé suivant l'une des revendications précédentes,
**caractérisé en ce que**
on détermine la signature ( SIG-1 ) utilisée comme valeur réelle à partir de tous les modules ( F-FBx, F-DBx, F-FCx ) de programme présents dans la mémoire ( AS ) de travail ou transmis pendant l'opération de charge dans la mémoire ( AS ) de travail.

8. Procédé suivant l'une des revendications précédentes,
**caractérisé en ce que**
on effectue de manière répétée une répétition de la vérification au moyen de la détermination d'une valeur ( SIG-I ) réelle de la signature au moyen de la comparaison ( V1 ) de cette signature à la copie, mémorisée comme valeur de consigne, de la signature ( SIG-S-1 ) pendant le fonctionnement de la commande par programme enregistré.

9. Procédé suivant l'une des revendication précédentes,
**caractérisé en ce que**
on utilise comme composant ( ES ) extérieur un système de développement ou un système d'ingénierie pour l'élaboration du programme d'application.

10. Procédé suivant l'une des revendications précédentes,
**caractérisé en ce que**
on utilise comme composant ( ES ) extérieur un serveur de sécurité ou un serveur de charge d'un agencement industriel d'automatisation.

11. Commande ( SPS ) par programme enregistré à utiliser dans un cas d'application sécurisé qui est conçu pour la vérification d'un programme d'application constitué d'un certain nombre de modules ( F-FBx, F-DBx, F-FCx ) de programme lequel, a été transmis d'une mémoire ( LS ) de charge dans une mémoire ( AS ) de travail de la commande ( SPS ) par programme enregistré,
dans laquelle la commande ( LS ) par programme enregistré est équipée d'une instance ( OV ) de gestion pour la détermination d'une valeur ( SIG-I ) réelle d'une signature du programme d'application dans une mémoire ( AS ) de travail de la commande ( SPS ) par programme enregistré et d'un dispositif de comparaison pour établir une première comparaison ( V1 ) de la valeur ( SIG-S-I ) réelle déterminée avec une deuxième signature ( SIG-S-1 ) mémorisée au cours de l'élaboration du programme d'application et mémorisée comme valeur de consigne dans la commande ( SPS ) par programme enregistré,
dans laquelle,
la commande ( SPS ) par programme enregistré est conçue pour une transmission d'une copie de la signature ( SIG-S-1 ) à un composant ( ES ) extérieur pour la réception d'un message d'accusé de réception sur le résultat d'une deuxième comparaison ( V2 ) effectuée par le composant ( ES ) extérieur de la copie de la signature ( SIG-S-1 ) avec une deuxième copie de la signature ( SIG-S-2 ), et dans laquelle la commande ( SPS ) par programme enregistré est conçue pour être activée dans un état de fonctionnement sécurisé dans le cas d'une divergence dans la première comparaison ( V1 ) et/ou d'une divergence dans la deuxième comparaison ( V2 ) et d'une divergence.
